# EUROPEAN PATENT APPLICATION

(11) **EP 0 819 806 A2**
(43) Date of publication of application: **21.01.1998**
(21) Application number: 97810264.8
(22) Date of filing: 29.04.1997
(51) Int. Cl.: E04F 13/08, F16B 43/00

(54) **Locking device for covering plates, comprising one or more washers that are coaxial with the wall attachment unit**

(30) Priority: 17.07.1996 IT RM960149 U
(71) Applicant: A-Fer S.A., 6982 Agno (CH)
(72) Inventor: Klein, Tiziano, 6814 Lamone (CH)
(74) Representative: Fiammenghi-Domenighetti, Delfina

(57) **Abstract**

A device for locking covering plates to the anchoring means of the walls to be covered is composed of one or more self-locking anti-unscrewing elastic washers (4) that are placed one on top of the other and can be inserted into a cylindrical blind hole (6) that is made in covering plate (5) and is equipped with units (1) which are coaxial with it and are able to connect it to the anchoring means, the tabs of said washers (4), when subjected to axial traction, bend and push radially against the walls of the cylindrical blind hole, thus keeping them from unscrewing.

## Description

This invention pertains to the area of covering a wall with plates or tiles made of some material (ceramic, stone, wood, etc.), in which a space for aeration is left between the walls and the plates (or tiles) secured between them.

More particularly, this invention pertains to the case where blind holes are made in the plates or tiles for introducing the wall attachment units. Clearly, if through holes were used, said attachment units would be plainly visible.

The currently known devices call for using truncated-conical holes on each plate and inserting plugs into said holes. The plugs are secured to the attachment units which, when they mate with the wall anchorings, cause the plugs to be compressed as they are screwed down and consequently to expand; this tends to keep them from unscrewing from the blind hole in the plate.

This system generally causes the plate to break during the process of attaching it, particularly when the covering plates are tiles.

The purpose of this invention is to provide a device which, while keeping the attachment units from unscrewing from the blind holes, precludes pulling and/or bending stress on the plate during the process of mounting it to the anchoring means of the walls to be covered.

This is accomplished by making cylindrical rather than truncated-conical holes in the plate or the tiles; such holes are easier to shape and involve less risk of the plates breaking, and are attached to the anchoring means with the aid of one or more self-locking elastic washers. More particularly, the object of this invention consists of a device for locking covering plates to the anchoring means of walls that are to be covered, as characterized by the characterizing part of the attached claim 1.

Other purposes and advantages of the invention will become clear from a detailed description of it, which refers to the attached drawings, which are simplified and nonlimiting in nature and in which:
- Fig. 1: show a cross-sectional view of a covering plate, whereby said section is made corresponding to the point where a bolt that acts as the attachment unit is inserted;
- Fig. 2: shows a front view of an example of an elastic self-locking washer that can be used for purposes of attachment;
- Fig. 3: shows a side view of the washer of Fig. 2;
- Fig. 4: shows a perspective sectional view of a covering plate, whereby said section is made corresponding to the point where a pack of thin anti-unscrewing plates mounted on one end of a bush is inserted.

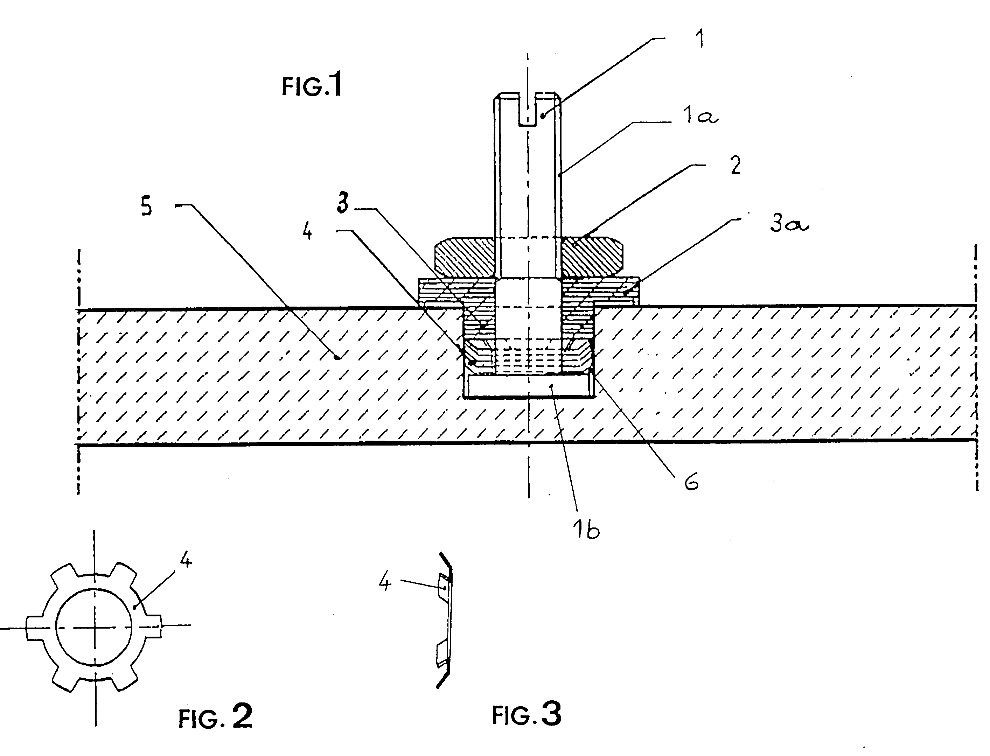

In looking at Fig. 1, a covering plate or covering tile 5 has one or more cylindrical blind holes 6, on the bottom of each of which rests head 1b of an attachment unit 1 that is basically shaped like a threaded bolt, the shank of which protrudes outward.

Threaded part 1a of said shank is able to mate with another element, e.g., a threaded hole or sleeve that is attached to the wall anchoring element, not shown.

Since blind hole 6 is cylindrical and head 1b would thus be free to slip out of the hole, elastic self-locking and anti-unscrewing washers 4, which are equipped with edge tabs, are coaxially threaded around attachment unit 1.

The washers are shown in front and side views, Figs. 2 and 3. They are sized in such a way that they can be inserted into blind hole 6 with the aid of a slightly forced coupling (which bends their tabs), making it impossible to remove them from the hole since the tabs are kept pushed against the cylindrical side wall of the hole.

It is known that the resistance of a washer to unscrewing is fairly good, even if it has a small diameter, and thus a pack of washers (four in Fig. 1) placed one on top of the other, as called for by this invention, will multiply their resistance to unscrewing, thus providing a reliable lock even when supporting heavy weights.

Thus, thanks to the greater resistance to unscrewing of a "pack" of elastic self-locking and anti-unscrewing washers 4, it is possible to reduce the outside diameter of the washers and thus of cylindrical blind hole 6 to the bare minimum (roughly 10-14 mm).

Along with the diameter of blind hole 6, it is also possible to reduce the size of the shank of connecting bolt 1 (approximately 6 mm) and thus the weight of the overall assembly.

The simplicity of the locking device of this invention, which is essentially composed of bolt 1 and washers 4, means that it can be used even for very thin plates or tiles 5 and, owing to the reduced dimensions (depth and diameter) of cylindrical blind hole 6, it can also be used in fragile materials such as ceramics.

Clearly, a hole of greater depth that is made in a stronger material can accommodate a larger number of washers 4, which are preferably separated by spacers (about 0.5 mm). Said spacers (not shown) also have the purpose of preventing direct contact between the tabs of washers 4, such that each of said tabs can push, freely and independently of the others, against the walls of blind hole 6, thereby multiplying the anti-unscrewing action.

Another solution that further enhances the anti-unscrewing action is one that calls for adopting washers 4 with a central hole that is not circular as in Fig. 2, but rather has a different shape (e.g., square or hexagonal); if the part of bolt 1 that is placed inside of them has a section that is appropriately shaped, it is ensured that, by tightening with an appropriate tool the free end of bolt 1 and turning it by a small angle after the washers are introduced into cylindrical hole 6, the pack of washers 4 will also turned by the same angle, whereby said pack of washers will form a series of furrows on the wall itself which will increase its resistance to unscrewing (this solution is not shown).

Clearly, if so desired, it is possible to modify the configurations of the various washers of a single "pack" in any way desired and to use different materials and/or thicknesses for each washer.

To improve the service life and function of the device of this invention, the inventor has also conceived of mounting on each hole 6 a plug 3 that has a certain degree of elasticity (being made of, e.g., PVC) which, when mounted coaxially inside the shank of connecting unit 1, prevents water and vapor from penetrating into hole 6.

For this purpose, it is a good idea to make on said plug 3 a widened stop flange 3a, which is supposed to remain outside of hole 6 itself adhering to the surface of covering plate 5.

The locking of the plug that is inserted into hole 6 is accomplished by tightening a nut 2.

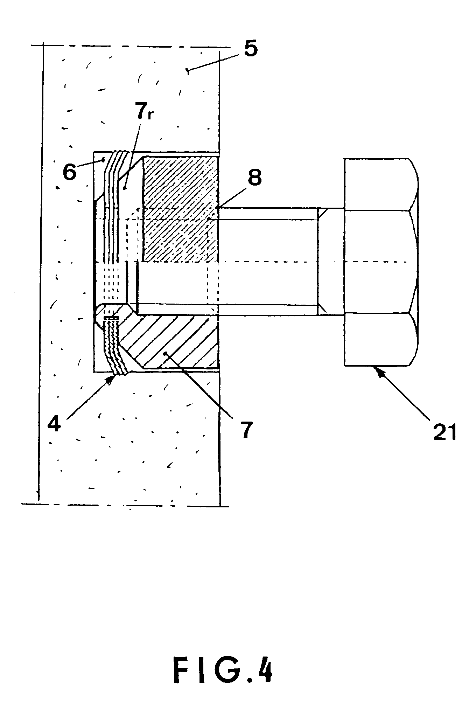

Another embodiment of the invention (see Fig. 4) calls for attaching, by means of caulking or similar methods, the pack of anti-unscrewing washers 4 on a tapered end 7r (truncated-conical in the figure) of a bush 7 in which there is a threaded hole 8, into which can be screwed a bolt 21 that acts as a connecting unit between plate 5 and the means of anchoring to a wall that is to be covered.

As in the preceding case, the unit consisting of bush+washers is threaded under slight pressure into a cylindrical blind hole 6 that is made in plate 5, and said bolt 21 can be mounted only at the time of installation; up until this point, there are no parts that protrude outside of the plate, with the obvious resultant advantages as regards the handling and storing of the plates themselves, which are already ready for use.

By turning bolt 21 by a small angle after it is tightened, it is ensured, as in the previous case, that furrows are formed on the surface of hole 6, with the above-described effect of enhanced anchoring.

It should be added that the device according to this invention, both in the embodiments described and depicted heretofore and in other embodiments that can be implemented as described in the attached claims, can be used to lock covering plates that are made of virtually any material, e.g., natural stone, artificial stone, ceramic granite, wood and plywood, glass, brick, cement, plasterboard, resin agglomerate, shredded wood, etc.

In the case of materials that yield plastically to compression, the washers, when an unscrewing pulling action is exerted on them, wedge into one another, thus producing an even more tighter connection.

## Claims

1. Device for locking covering plates to the anchoring means of the walls to be covered, wherein said device is composed of one or more self-locking anti-unscrewing elastic washers (4) that are placed one on top of the other and can be inserted into a cylindrical blind hole (6) that is made in covering plate (5) and is equipped with units (1, 7, 21) which are coaxial with it and are able to connect it to the anchoring means, the tabs of said washers (4), when subjected to axial traction, bend and push radially against the walls of the cylindrical blind hole, thus keeping them from unscrewing.

2. Device according to claim 1, wherein said one or more self-locking anti-unscrewing elastic washers (4) are attached to a tapered end (7r) of a bush (7) that is equipped with a threaded hole (8), into which the threaded end of a unit (21) for attaching it to the anchoring means can be screwed.

3. Device according to claim 2, wherein said connecting unit is a bolt (21), and said one or more self-locking anti-unscrewing elastic washers (4) are attached to a tapered end (7r) of a bush (7) by means of caulking.

4. Device according to claim 1, wherein said connecting unit is a bolt (1) that rests with its head (1b) on the bottom of cylindrical blind hole (6) and is kept in this position by a pack of self-locking anti-unscrewing elastic washers (4) that are placed one on top of the other and coaxial with said hole, whereby the tabs of said washers are folded and pushed against the wall of blind hole (6), thus keeping the pack of washers (4) from unscrewing.

5. Device according to claim 4, wherein the part of bolt (1) that is placed inside of washers (4) has a section that is non-circular, and in the center each washer (4) has a hole of matching shape, such that when bolt (1) rotates by a small angle, the pack of washers (4) is also turned by the same angle after it is introduced into blind hole (6) so as to allow the tabs to form furrows on the walls of blind hole (6) and increase the resistance to unscrewing.

6. Device according to claim 4 or 5, wherein it additionally includes:
- a plug (3) that is made of a material which has a predetermined elasticity and is applied coaxially within each connecting unit (1) with at least one part inserted with limited interference into blind cylindrical hole (6) in which each connecting unit (1) is located, in such a way as to keep water or vapor from penetrating into hole (6);
- an attachment element, preferably a locking nut (2) that is screwed onto threaded part (1a) of each connecting unit (1), in such a way as to lock said plug (3).
